(19) **Europäisches Patentamt / European Patent Office / Office européen des brevets**

(11) **EP 4 597 647 A1**

(12) **EUROPEAN PATENT APPLICATION**
published in accordance with Art. 153(4) EPC

(43) Date of publication:
**06.08.2025 Bulletin 2025/32**

(21) Application number: **23871320.0**

(22) Date of filing: **15.06.2023**

(51) International Patent Classification (IPC):
**H01M 8/0245** (2016.01)  **H01M 8/0232** (2016.01)
**H01M 8/0234** (2016.01)  **H01M 8/0247** (2016.01)
**H01M 8/12** (2016.01)

(52) Cooperative Patent Classification (CPC):
**H01M 8/0232; H01M 8/0234; H01M 8/0245;**
**H01M 8/0247; H01M 8/12;** Y02E 60/50

(86) International application number:
**PCT/JP2023/022176**

(87) International publication number:
**WO 2024/070075 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.09.2022 JP 2022155329**

(71) Applicant: SUMITOMO ELECTRIC INDUSTRIES,
LTD.
**Osaka-shi, Osaka 541-0041 (JP)**

(72) Inventors:
• **NUMATA, Koma**
**Osaka-shi, Osaka 541-0041 (JP)**
• **HIRAI, Kei**
**Osaka-shi, Osaka 541-0041 (JP)**
• **UEKI, Misato**
**Osaka-shi, Osaka 541-0041 (JP)**
• **HOSOE, Akihisa**
**Osaka-shi, Osaka 541-0041 (JP)**

(74) Representative: **Boult Wade Tennant LLP**
**Salisbury Square House**
**8 Salisbury Square**
**London EC4Y 8AP (GB)**

(54) **CONDUCTIVE MEMBER AND SOLID OXIDE FUEL CELL INCLUDING SAME**

(57) This conductive member includes a porous body having a skeleton with a three-dimensional network structure. The porous body has a plate shape comprising a first main surface and a second main surface opposite from the first main surface; the first main surface contains carbon atoms; the porous body is an NiCrAl metal porous body or an NiCrAlFe metal porous body.

**FIG. 1**

3(10)

EP 4 597 647 A1

**Description**

TECHNICAL FIELD

The present disclosure relates to a conductive member and a solid oxide fuel cell including the same. This application claims priority from Japanese Patent Application No. 2022-155329 filed on September 28, 2022, and the entire contents of which are incorporated herein by reference.

BACKGROUND ART

A conductive member including a porous body containing nickel, chromium, and aluminum or a porous body containing nickel, chromium, iron, and aluminum is conventionally used in a solid oxide fuel cell (Patent literature 1, Patent literature 2).

CITATION LIST

PATENT LITERATURE

Patent literature 1: WO 2016/021988
Patent literature 2: Japanese Unexamined Patent Application Publication No. 6-29024

SUMMARY OF INVENTION

A conductive member according to an aspect of the present disclosure includes a porous body having a skeleton with a three-dimensional mesh-like structure. The porous body has a plate-like shape having a first main surface and a second main surface opposite to the first main surface, the first main surface contains carbon atoms, and the porous body is a NiCrAl metal porous body or a NiCrAlFe metal porous body.
A solid oxide fuel cell according to an aspect of the present disclosure includes the conductive member.

BRIEF DESCRIPTION OF THE DRAWINGS

FIG. 1 is a schematic cross-sectional view showing an example of a conductive member according to an aspect of the present disclosure.
FIG. 2 is a schematic enlarged view of the region II in FIG. 1.
FIG. 3 is a schematic enlarged view of the region III in FIG. 2.
FIG. 4 is a schematic enlarged view of the region IV in FIG. 1.
FIG. 5 is a schematic cross-sectional view showing an example of a solid oxide fuel cell according to an embodiment.
FIG. 6 is a schematic view showing a method for measuring the value of contact resistance.

DETAILED DESCRIPTION

[Problems to be Solved by Present Disclosure]

In the solid oxide fuel cell, a surface of the conductive member is in contact with a connection member (interconnector). In a surface region of the conductive member including the porous body containing nickel, chromium, and aluminum or the porous body containing nickel, chromium, iron, and aluminum, oxidation of the metal progresses with use, and an oxide is formed. The generation of the oxide increases the contact resistance between the conductive member and the connection member (interconnector), and the output may be reduced.
An object of the present disclosure is to provide a conductive member which, when used in a solid oxide fuel cell, is unlikely to increase contact resistance associated with the use of the solid oxide fuel cell, and a solid oxide fuel cell which is unlikely susceptible to deterioration in output performance and has excellent output performance.

[Advantageous Effects of Present Disclosure]

According to the present disclosure, it is possible to provide a conductive member which, when used in a solid oxide fuel cell, is unlikely to increase contact resistance associated with the use of the solid oxide fuel cell, and a solid oxide fuel cell which is unlikely susceptible to deterioration in output performance and has excellent output performance.

[Description of Embodiments of Present Disclosure]

First, embodiments of the present disclosure will be listed and described.

[1] A conductive member according to an aspect of the present disclosure includes

a porous body having a skeleton with a three-dimensional mesh-like structure.
The porous body has a plate-like shape having a first main surface and a second main surface opposite to the first main surface,
the first main surface contains carbon atoms,
and the porous body is a NiCrAl metal porous body or a NiCrAlFe metal porous body.

When the conductive member according to the aspect of the present disclosure is used in a solid oxide fuel cell, contact resistance associated with the use of the solid oxide fuel cell is unlikely to increase. Thus, the solid oxide fuel cell including the conductive member is unlikely susceptible to deterioration in output performance and have excellent output performance.

[2] In the above [1], the carbon atoms may be present in a form of conductive carbon. When the conductive member according to the aspect of the present disclosure is used in a solid oxide fuel cell, contact resistance associated with the use of the solid oxide fuel cell is unlikely to increase. Thus, the solid oxide fuel cell including the conductive member is unlikely susceptible to deterioration in output performance and have excellent output performance.

[3] In the above [1] or [2], the skeleton may have a first region,
the first region may be a region extending from the first main surface to a plane parallel to the first main surface, the plane may be distant from the first main surface by 10 nm, and a content of the carbon atoms in the first region may be 10 atm% to 90 atm%. Thus, the conductive member according to the aspect of the present disclosure allows contact resistance to be kept lower when used in a solid oxide fuel cell. Thus, the solid oxide fuel cell including the conductive member is more unlikely susceptible to deterioration in output performance and have more excellent output performance.

[4] In the above [3], the content may be 20 atm% to 80 atm%. When the conductive member according to the aspect of the present disclosure is used in a solid oxide fuel cell, contact resistance associated with the use of the solid oxide fuel cell is unlikely to increase. Thus, the solid oxide fuel cell including the conductive member is unlikely susceptible to deterioration in output performance and have excellent output performance.

[5] In the above [3], the content may be 30 atm% to 70 atm%. When the conductive member according to the aspect of the present disclosure is used in a solid oxide fuel cell, contact resistance associated with the use of the solid oxide fuel cell is unlikely to increase. Thus, the solid oxide fuel cell including the conductive member is unlikely susceptible to deterioration in output performance and have excellent output performance.

[6] In any one of the above [1] to [5], a thickness of the porous body may be 0.2 mm to 2 mm. The conductive member according to the aspect of the present disclosure has both strength and good conductivity. Thus, the solid oxide fuel cell including the conductive member can have excellent output performance.

[7] In any one of the above [1] to [6], an average pore size of the porous body may be 60 $\mu$m to 3500 $\mu$m. The conductive member according to the aspect of the present disclosure has both good electrical conductivity and good breathability. Thus, the solid oxide fuel cell including the conductive member can have excellent output performance.

[8] In the above [7], the average pore size of the porous body may be 100 $\mu$m to 850 $\mu$m. The conductive member according to the aspect of the present disclosure has both good electrical conductivity and good breathability. Thus, the solid oxide fuel cell including the conductive member can have excellent output performance.

[9] In any one of the above [1] to [8], an average porosity of the porous body may be 50% to 98%. The conductive member according to the aspect of the present disclosure has both good strength and lightness. Thus, the solid oxide fuel cell including the conductive member can have excellent strength and lightness.

[10] In any one of the above [1] to [9], in the NiCrAl metal porous body, a skeleton body may contain a Ni element, a Cr element, and an Al element in a total amount of 55 mass% or more. The conductive member according to the aspect of the present disclosure has excellent corrosion resistance and heat resistance. When used in a solid oxide fuel cell, resistance is unlikely to increase. Thus, the solid oxide fuel cell including the conductive member is unlikely susceptible to deterioration in output performance and have excellent output performance.

[11] In any one of the above [1] to [9], in the NiCrAlFe metal porous body, a skeleton body may contain a Ni element, a Cr element, an Al element, and an Fe element in a total amount of 55 mass% or more. The conductive member according to the aspect of the present disclosure has excellent corrosion resistance and heat resistance. When used in a solid oxide fuel cell, resistance is unlikely to increase. Thus, the solid oxide fuel cell including the conductive member is unlikely susceptible to deterioration in output performance and have excellent output performance.

[12] A solid oxide fuel cell according to an aspect of the present disclosure includes the conductive member according to the above [1] to [11]. Thus, the solid oxide fuel cell according to the aspect of the present disclosure can have excellent output performance.

[13] In the above [12], the first main surface may be in contact with at least one of a first interconnector and a second interconnector described later. Thus, the solid oxide fuel cell according to the aspect of the present disclosure can have excellent output performance.

[Details of Embodiments of Present Disclosure]

Hereinafter, specific examples of a conductive member of an embodiment (hereinafter also referred to as the "present embodiment") of the present disclosure and a solid oxide fuel cell including the same will be described with reference to the drawings. In the drawings of the present disclosure, the same reference numerals denote the same or corresponding parts. In addition, the dimensional relationships such as length, width, thickness, and depth are appropriately changed for the sake of clarity and simplification of the drawings, and do not necessarily represent actual dimensional relationships.

In the present specification, when a compound (alloy) or the like is represented by a chemical formula in which the composition ratio of constituent elements is not limited, such as "NiCrAl", the chemical formula includes all conventionally known composition ratios (element ratios). Further, the above chemical formula includes not only a stoichiometric composition but also a non-stoichiometric composition. For example, the chemical formula for "NiCrAl" includes not only the stoichiometric composition "$Ni_1Cr_1Al_1$", but also non-stoichiometric compositions, such as "$Ni_1Cr_1Al_{0.8}$". This also applies to the description of compounds other than "NiCrAl".

[First Embodiment: Conductive Member]

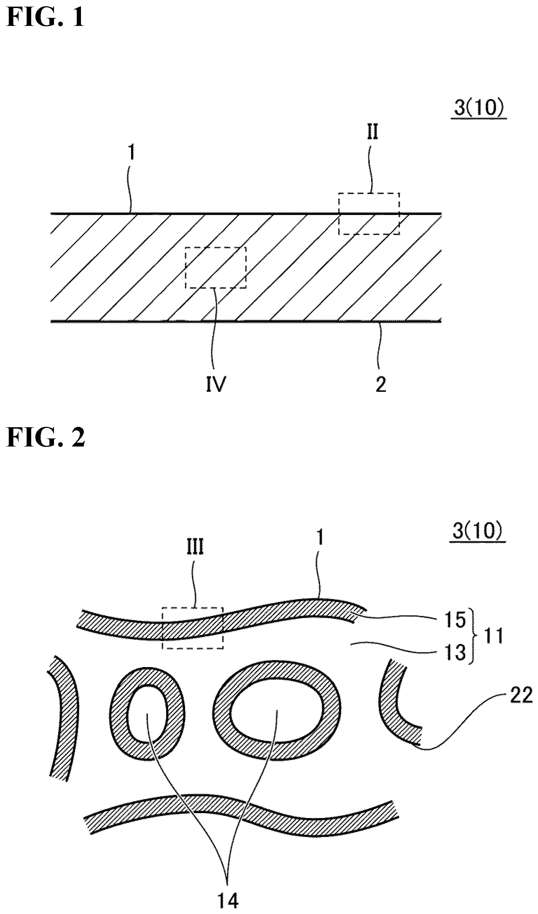

A conductive member according to an embodiment of the present disclosure will be described with reference to FIGS. 1 to 4.

A conductive member 3 according to the embodiment (hereinafter also referred to as the "present embodiment") of the present disclosure is conductive member 3 including a porous body 10 having a skeleton 11 with a three-dimensional mesh-like structure, wherein porous body 10 has a plate-like shape having a first main surface 1 and a second main surface 2 opposite to first main surface 1,

first main surface 1 contains carbon atoms,

and porous body 10 is a NiCrAl metal porous body or a NiCrAlFe metal porous body.

<<Porous Body>>

<Shape of Porous Body>

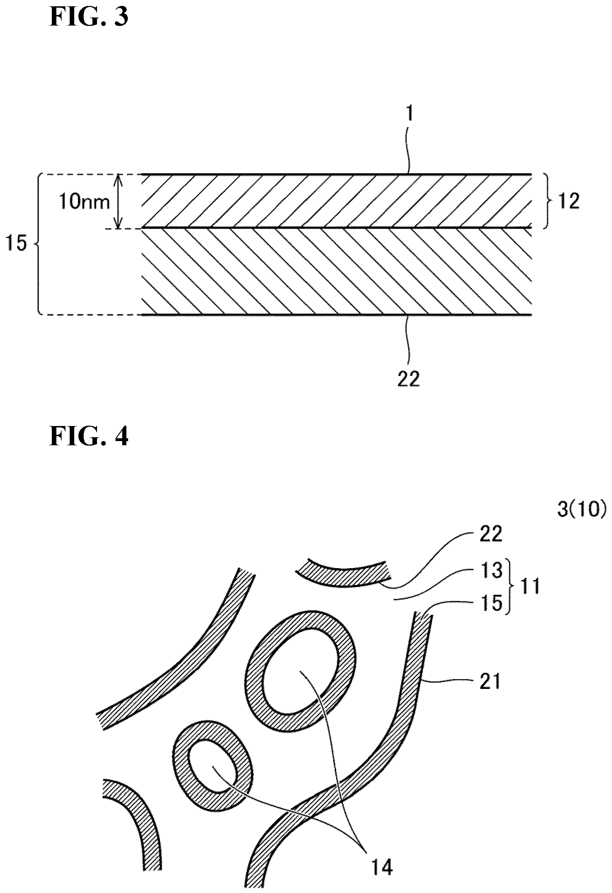

Conductive member 3 of the present disclosure includes porous body 10 having skeleton 11 with a three-dimensional mesh-like structure. In the present disclosure, the three-dimensional mesh-like structure may be the same structure as the structure described in paragraph 0047 to paragraph 0054 of the specification of WO 2019/244480. In the present disclosure, the skeleton may be the same structure as the structure described in paragraph 0034 to paragraph 0036 of the specification of WO 2019/244480. For example, as shown in FIGS. 2 and 4, porous body 10 has a three-dimensional mesh-like structure having skeleton 11 and a pore portion 14. Skeleton 11 is composed of a skeleton body 15 and a hollow interior 13 surrounded by skeleton body 15. Conductive member 3 of the present disclosure is composed of porous body 10 having skeleton 11 of a three-dimensional mesh-like structure.

Skeleton 11 has a part in which interior 13 surrounded by skeleton body 15 has a hollow cylindrical shape. The cross section orthogonal to an extending direction of the cylindrical shape may be a triangle or other polygons, or may be a circle. Skeleton 11 is cylindrical in shape and thus has a cylindrical inner surface 22 and a cylindrical outer surface 21 (FIG. 4). Skeleton 11 has hollow interior 13 surrounded by skeleton body 15, and thus porous body 10 can be made very lightweight (that is, conductive member 3 can be made very lightweight). Skeleton 11 is not limited to being hollow, and may be solid. In this case, the strength of conductive member 3 can be improved.

Porous body 10 has a plate-like shape having first main surface 1 and second main surface 2 opposite to first main surface 1. A thickness of porous body 10 may be 0.2 mm to 2 mm. Porous body 10 having a thickness of 2 mm or less can be smaller in thickness than conventional, and can reduce the amount of metal required. Porous body 10 having a thickness of 0.2 mm or more can have necessary strength. The thickness of porous body 10 may be 0.5 mm to 1 mm. The thickness of porous body 10 can be measured with, for example, a commercially available digital thickness gauge (TECLOCK Co., Ltd.).

<Composition of Porous Body>

First main surface 1 contains carbon atoms, and thus first main surface 1 is provided with conductivity. During operation of a solid oxide fuel cell 150, oxides (nickel oxides, chromium oxides, aluminum oxides, iron oxides, NiCrAl oxides, NiCrAlFe oxides, etc.) generated on first main surface 1 increase the contact resistance between first main surface 1 of conductive member 3 and a connection member (interconnector), but the contact resistance is unlikely to increase by the conductivity of the carbon atoms contained in first main surface 1. Here, the expression "first main surface 1 contains carbon atoms" can also be interpreted as "at least a part of carbon atoms among all carbon atoms contained in porous body 10 is present so as to be exposed on first main surface 1".

The carbon atoms may be present in a form of conductive carbon. According to this, the conductivity of first main surface 1 is improved, and in solid oxide fuel cell 150, it can be more unlikely to increase the contact resistance between conductive member 3 and the connection member. Examples of the conductive carbon include carbon black (thermal black, furnace black, lamp black, channel black, acetylene black, and the like).

The fact that "first main surface 1 contains carbon atoms" can be identified by the following method. First, in a rectangular measurement region of $1\ \mu m \times 1\ \mu m$ at any one position on first main surface 1, an outer surface of skeleton 11 is subjected to surface analysis using an Auger electron spectroscopy apparatus with the trademark name "PHI 650" manufactured by Perkin-Elmer, Inc. The surface analysis is performed under the following conditions in accordance with JIS K 0146:2002 (ISO 14606:2000).

<Measurement Conditions>

Electronic energy: 10 kV
E-beam current: 3 mA
Incident angle with respect to first main surface 1: 90 degrees
(Detector: 55 degrees)
Beam diameter: 1 nm
Mode: Surface analysis
Elements to be measured: oxygen, carbon and metal components such as nickel, chromium, aluminum, and iron

Similar analysis is performed for any other nine positions on first main surface 1. When the carbon atoms are detected in at least one of the ten positions, it is determined that "first main surface 1 contains carbon atoms". It has been confirmed that there is no variation in measurement results even when the measurement position is freely selected as long as the measurement is performed by the above-described method in the same conductive member 3.

As long as "first main surface 1 contains carbon atoms", second main surface 2 may or may not contain carbon atoms. The "second main surface 2 contains carbon atoms" can be identified by the same method as the method for identifying the "first main surface 1 contains carbon atoms" except that the "second main surface 2" is the measurement target.

A surface (outer surface 21) of skeleton 11 is located in a region sandwiched between first main surface 1 and second main surface 2. As long as first main surface 1 contains carbon atoms, the surface (outer surface 21) of skeleton 11 that does not constitute first main surface 1 may or may not contain carbon atoms.

<First Region>

Skeleton 11 has a first region 12, which is a region extending from first main surface 1 to a plane parallel to first main surface 1, and the plane is distant from first main surface 1 by 10 nm (FIG. 3).

(Composition of First Region)

A content C1 of the carbon atoms in first region 12 may be 10 atm% to 90 atm%. According to this, when first main surface 1 and the connection member are in contact with each other, it allows the contact resistance between conductive member 3 and the connection member to be kept lower. Further, by setting the upper limit of C1 to 90 atm% or less, it is possible to reduce the carbon on the surface of the skeleton from being desorbed and blocking the flow paths of various gases of the solid oxide fuel cell. The lower limit of C1 may be 20 atm% or more, or may be 25 atm% or more. It may also be 30 atm% or more. The upper limit of C1 may be 80 atm% or less, may be 70 atm% or less, or may be 60 atm% or less. C1 may be 20 atm% to 80 atm%, may be 25 atm% to 70 atm%, or may be 30 atm% to 60 atm%. It allows the contact resistance between conductive member 3 and the contact member to be kept low even further.

The content of the carbon atoms in first region 12 is measured using an Auger electron spectrometer. Starting from the surface of skeleton 11, the measurement is performed at points at every 1 nm interval in a depth direction of skeleton 11. The depth direction refers to a direction perpendicular to first main surface 1. That is, it is measured at a total of 11 points at 1 nm intervals, with distances from the surface of skeleton 11 ranging from 0 nm to 10 nm. The measurement is performed under the following conditions in accordance with JIS K 0146:2002 (ISO 14606:2000).

<Measurement Conditions>

Electronic energy: 10 kV
E-beam current: 3 mA
Incident angle with respect to first main surface 1: 90 degrees
(Detector: 55 degrees)
Beam diameter: 1 nm
Sputter ions: Ar
Mode: Depth direction analysis (depth profiling)
Elements to be measured: oxygen, carbon and metal components such as nickel, chromium, aluminum, and iron

An average value of the content of the carbon atoms to the total of carbon atoms, metal atoms (nickel atoms, chromium atoms, aluminum atoms, iron atoms, etc.), and oxygen atoms at each point is calculated, thereby obtaining an average value of the content of the carbon atoms located in the depth direction at the location on first main surface 1. Further, the same analysis is performed for other arbitrary four locations on first main surface 1. C1 is obtained by calculating the average value of the content of carbon atoms at the five locations in total.

It has been confirmed that there is no variation in the measurement result even when the measurement region is arbitrarily changed as long as the measurement is performed by the above-described method in the same conductive member 3.

<Type of Porous Body>

(Metal Porous Body)

Porous body 10 is a NiCrAl metal porous body or a NiCrAlFe metal porous body. This can improve the conductivity of conductive member 3. Thus, solid oxide fuel cell 150 including conductive member 3 can have excellent output performance. Here, the NiCrAl metal porous body means porous body 10 in which the body of skeleton 11 contains a Ni element, a Cr element, and an Al element as main components and does not contain a Fe element, and the NiCrAlFe metal porous body means porous body 10 in which the body of skeleton 11 contains a Ni element, a Cr element, an Al element, and a Fe element as main components. Here, "the body of skeleton 11 contains a Ni element, a Cr element, and an Al element as main components" means that the total content of the Ni element, the Cr element, and the Al element exceeds 50 mass% in the body of skeleton 11. Further, here, "the body of skeleton 11 contains a Ni element, a Cr element, an Al element, and a Fe element as main components" means that the total content of the Ni element, the Cr element, the Al element, and the Fe element exceeds 50 mass% in the body of skeleton 11. The fact that "the body of skeleton 11 contains a Ni element, a Cr element, and an Al element as main components" and the fact that "the body of skeleton 11 contains a Ni element, a Cr element, an Al element, and an Fe element as main components" are specified by adding up "content of each of the metal elements in the body of skeleton 11" obtained by a method described later. Hereinafter, the NiCrAl metal porous body and the NiCrAlFe metal porous body are also collectively referred to as a "metal porous body" or a "porous body".

In the NiCrAl metal porous body, the body of skeleton 11 may contain the Ni element, the Cr element, and the Al element in a total amount of 55 mass% or more, 60 mass% or more, or 65 mass% or more. This improves the corrosion resistance and heat resistance of porous body 10, and further reduces a decrease in conductivity during use. In the NiCrAl metal porous body, the body of skeleton 11 may contain the Ni element, the Cr element, and the Al element in a total amount of 100 mass% or less, 99 mass% or less, or 98 mass% or less. In the NiCrAl metal porous body, the body of skeleton 11 may contain the Ni element, the Cr element, and the Al element in a total amount of 55 mass% to 100 mass%, 60 mass% to 99 mass%, or 65 mass% to 98 mass%.

In the NiCrAlFe metal porous body, the body of skeleton 11 may contain a Ni element, a Cr element, an Al element, and a Fe element in a total amount of 55 mass% or more, 60 mass% or more, or 65 mass% or more. This improves the corrosion resistance and heat resistance of porous body 10, and further reduces a decrease in conductivity during use. In the NiCrAlFe metal porous body, the body of skeleton 11 may contain the Ni element, the Cr element, the Al element, and the Fe element in a total amount of 100 mass% or less, 99 mass% or less, or 98 mass% or less. In the NiCrAlFe metal porous body, the body of skeleton 11 may contain the Ni element, the Cr element, the Al element, and the Fe element in a total amount of 55 mass% to 100 mass%, 60 mass% to 99 mass%, or 65 mass% to 98 mass%.

As the NiCrAl metal porous body, for example, a porous body described in Patent literature 2 (Japanese Unexamined Patent Application Publication No. 6-29024) or a porous body obtained by changing a composition of skeleton of a porous body described in the specification of WO 2019/244480 to NiCrAl can be used.

As the NiCrAlFe metal porous body, for example, a NiCrAlFe metal porous body described in Patent literature 2 or a porous body obtained by changing a composition of skeleton of a porous body described in the specification of WO 2019/244480 to NiCrAlFe can be used.

The content of each of the metal elements and of oxygen in the body of skeleton 11 can be obtained by the following procedure. First, a part where skeleton 11 extends is specified, and an observation image of a cross section perpendicular to an extending direction of skeleton 11 is obtained with an electron microscope (SEM). Next, the observation image is analyzed using an EDX apparatus attached to the SEM. As the SEM, for example, a product available under the trade name "SUPRA35VP" manufactured by Carl Zeiss Microscopy Co., Ltd. is used. As the EDX apparatus, for example, a product available under the trade name "Octane super" manufactured by Ametek Inc. is used. Based on the atomic concentration of each of the elements detected by the EDX apparatus, mass%, mass ratio, and the like of oxygen and each of the metal elements in skeleton body 15 can be obtained.

It has been confirmed that there is no variation in measurement results even when the measurement region is arbitrarily changed as long as the measurement is performed by the above-described method in the same skeleton 11.

The body of skeleton 11 may contain other elements as constituent elements as long as the elements do not affect the operation or effect of conductive member 3 of the present disclosure. The body of skeleton 11 may contain other elements such as silicon, magnesium, carbon, sodium, tungsten, titanium, phosphorus, boron, silver, gold, molybdenum, nitrogen, sulfur, fluorine, or chlorine. These components may be contained as inevitable impurities that are inevitably mixed in the manufacturing method described later, for example. The content of each of the other elements in skeleton 11 is preferably 5 mass% or less, and the total content of the other elements may be 1 mass% or less in total. The contents of each of the other elements in the body of skeleton 11 can be measured by the same method as the "content of each of the metal elements in the body of skeleton 11".

It has been confirmed that there is no variation in measurement results even when the measurement region is arbitrarily changed as long as the measurement is performed by the above-described method in the same skeleton 11.

<Apparent Weight of Skeleton>

Skeleton 11 of the NiCrAl metal porous body may contain nickel, chromium, and aluminum in a total apparent weight of 200 $g/m^2$ to 1000 $g/m^2$. This makes it possible to achieve both strength and weight reduction of porous body 10. The total apparent weight of nickel, chromium, and aluminum may be 250 $g/m^2$ to 900 $g/m^2$. This makes it possible to further achieve both the strength and the weight reduction of porous body 10. The total apparent weight of nickel, chromium, and aluminum can be appropriately adjusted by changing the amount of slurry applied in the method for manufacturing the NiCrAl metal porous body.

The total apparent weight of nickel, chromium, and aluminum is converted into a mass per unit volume of the skeleton (apparent density of skeleton) as follows. That is, the "apparent density of skeleton" may be 0.14 $g/cm^3$ to 0.75 $g/cm^3$, or 0.18 $g/cm^3$ to 0.65 $g/cm^3$. The "apparent density of skeleton" is defined by the following equation.

$$\text{Apparent density of skeleton } [g/cm^3] = M \, [g]/V \, [cm^3], \text{ where}$$

where

M: mass of skeleton [g], and
V: volume of shape of external appearance of skeleton $[cm^3]$.

Skeleton 11 of the NiCrAlFe metal porous body may contain nickel, chromium, aluminum, and iron in a total apparent weight of 200 $g/m^2$ to 1000 $g/m^2$. This makes it possible to achieve both the strength and the weight reduction of porous body 10. The total apparent weight of nickel, chromium, aluminum, and iron may be 250 g/m$^2$ to 900 g/m$^2$. This makes it possible to further achieve the strength and the weight reduction of porous body 10. The total apparent weight of nickel, chromium, aluminum, and iron can be appropriately adjusted by changing the amount of slurry applied in the method for manufacturing the NiCrAlFe metal porous body.

The total apparent weight of nickel, chromium, aluminum, and iron is converted into a mass per unit volume of the skeleton (apparent density of skeleton) as follows. That is, the "apparent density of skeleton" may be 0.14 g/cm$^3$ to 0.75 g/cm$^3$, or 0.18 g/cm$^3$ to 0.65 g/cm$^3$.

<Porosity of Porous Body>

A porosity of each of the NiCrAl metal porous body and the NiCrAlFe metal porous body may be 40% to 98%, 45% to 98%, or 50% to 98%. When the porosity of porous body 10 is 40% or more, porous body 10 can be made very lightweight and the surface area of porous body 10 can be increased. When the porosity of porous body 10 is 98% or less, porous body 10 can be provided with sufficient strength. The porosity of porous body 10 can be appropriately adjusted by adjusting the porosity of the foamed resin to be used.

The porosity of porous body 10 is defined by the following equation.

$$\text{Porosity } [\%] = [1 - \{M/(V \times d)\}] \times 100, \text{ where}$$

where

M: mass of porous body [g],
V: volume of shape of external appearance of porous body [cm$^3$], and
d: density of metal constituting porous body [g/cm$^3$].

<Pore Size of Porous Body>

An average pore size of each of the NiCrAl metal porous body and the NiCrAlFe metal porous body may be 60 $\mu$m to 3500 $\mu$m. When the average pore size of porous body 10 is 60 $\mu$m or more, the strength of porous body 10 can be increased. When the average pore size of porous body 10 is 3500 $\mu$m or less, the bendability (bending workability) of porous body 10 can be enhanced. From these viewpoints, the average pore size of porous body 10 may be 80 $\mu$m to 1000 $\mu$m, or 100 $\mu$m to 850 $\mu$m. This can further increase the strength and bendability of porous body 10. The average pore size of porous body 10 can be appropriately adjusted by adjusting the pore size of the foamed resin to be used.

The average pore size of porous body 10 can be determined by the following method. First, a part of porous body 10 where skeleton 11 extends is specified. Porous body 10 is cut perpendicularly to the extending direction of skeleton 11 to expose the cross section of porous body 10. One of the cut cross sections is selected, and this is magnified at a magnification of 3000 times and observed with an electron microscope to obtain an observation image. At least 10 visual fields of the observation image are prepared, and the number of pores per inch (25.4 [mm] = 25400 [$\mu$m]) is obtained in each of the 10 visual fields. Further, the number of pores in the 10 visual fields is defined as an average value (nc), and a numerical value calculated by substituting the average value into the following equation is defined as the average pore size of porous body 10.

$$\text{Average pore size } [\mu m] = 25400 \ [\mu m]/nc$$

Here, the porosity of skeleton 11 and the porosity of porous body 10 are the same. The average pore size of skeleton 11 and the average pore size of porous body 10 are the same.

<Thickness of Skeleton Body>

In skeleton 11 of each of the NiCrAl metal porous body and the NiCrAlFe metal porous body, a thickness of skeleton body 15 may be 10 $\mu$m to 50 $\mu$m. Here, the "thickness of skeleton body 15" means an average value of the shortest distance from inner surface 22 of skeleton body 15 to outer surface 21 of skeleton body 15. The thickness of skeleton body 15 can be obtained by observing the cross section of skeleton 11 with an electron microscope. The thickness of skeleton body 15 can be appropriately adjusted by adjusting the thickness of the foamed resin to be used.

The thickness of skeleton body 15 can be specifically obtained by the following method. First, a part of porous body 10 where skeleton 11 extends is specified. Porous body 10 is cut perpendicularly to the extending direction of skeleton 11 to expose the cross section of skeleton body 15. One of the cut cross sections is selected, and this is magnified at a magnification of 3000 times and observed with an electron microscope to obtain an observation image. Next, a thickness of skeleton body 15 is measured at 10 points in the observation image. Next, an average of the measured values at the 10 points is calculated. The average corresponds to the thickness of skeleton body 15 of the present disclosure.

<<Method for Manufacturing Conductive Member>>

Conductive member 3 according to the present embodiment can be manufactured by, for example, the following method. That is, conductive member 3 can be manufactured by the method of manufacturing conductive member 3 including, in this order,

a first step of preparing a porous body having a plate-like shape and a conductive paste in which conductive carbon particles are dispersed in a solvent,
a second step of obtaining a conductive member precursor by bringing the conductive paste into contact with the porous body, and
a third step of obtaining conductive member 3 by performing heat treatment on the conductive member precursor.
The first step includes a first A step of preparing a porous body having a plate-like shape and a first B step of preparing a conductive paste in which conductive carbon particles are dispersed in a solvent.

<First Step>

(First A Step)

In the first A step, a first porous body made of NiCrAl or NiCrAlFe is prepared as a porous body having a plate-like shape. As the first porous body, a commercially available porous body, a porous body described in Patent literature 2 (Japanese Unexamined Patent Application Publication No. 6-29024), or a porous body obtained by changing the composition of the skeleton of described in the specification of WO 2019/244480 to NiCrAl or NiCrAlFe can be used. The first porous body made of NiCrAl and the first porous body made of NiCrAlFe can also be manufactured by, for example, the following method.

In the method for manufacturing the first porous body made of NiCrAl, Ni powder, Cr powder and Al powder (all of which have a particle diameter of less than 100 $\mu$m), a solvent, and a binder are uniformly mixed at a predetermined mixing ratio to prepare a slurry. The solvent includes, but is not limited to, water, ethanol, methanol, N-methyl-2-pyrrolidone (NMP), and the like. The binder includes, but is not limited to, polyvinylidene fluoride (PVdF), polytetrafluoroethylene (PTFE), polyvinyl alcohol (PVA), and carboxymethyl cellulose (CMC), and the like. The mixing method may be, but is not limited to, a method for mixing at 400 rpm for 1 hour using a small-sized ball-mill rotating frame manufactured by Asahi Rika Seisakusho. Next, a foamed resin is immersed in the obtained slurry to apply the slurry onto the foamed resin, thereby obtaining a first porous body precursor. Next, the first porous body precursor is subjected to a heat treatment in air at 650°C for about 15 minutes, and then subjected to heat treatment for three hours in a hydrogen gas atmosphere at 1000°C, thereby manufacturing a first porous body. The ratio of each of the Ni element, the Cr element, and the Al element contained in the first porous body can be appropriately adjusted by adjusting the ratio of each of the Ni powder, the Cr powder, and the Al powder.

The first porous body made of NiCrAlFe can be manufactured by the same method as that of the "method for manufacturing the first porous body made of NiCrAl" except that "Ni powder, Cr powder, Al powder, and Fe powder (all of which have a particle diameter of less than 100 $\mu$m)" is used instead of "Ni powder, Cr powder and Al powder (all of which have a particle diameter of less than 100 $\mu$m)". The ratio of the Ni element, the Cr element, the Al element, and the Fe element contained in the first porous body can be appropriately adjusted by adjusting the ratio of the Ni powder, the Cr powder, the Al powder, and the Fe powder.

(First B step)

In the first B step, a conductive paste in which conductive carbon particles are dispersed in a solvent is prepared. The conductive carbon particles are a raw material of the carbon atoms contained in first main surface 1 of conductive member 3. Examples of the conductive carbon particles include carbon black (thermal black, furnace black, lamp black, channel black, acetylene black, and the like). Examples of the solvent include water, ethanol, methanol and the like. In the conductive paste, the conductive carbon particles may be 5 parts by mass to 40 parts by mass with respect to 100 parts by mass of the solvent. The parts by mass of the conductive carbon particles in the conductive paste can be adjusted as appropriate so that the content C1 of the carbon atoms in first region 12 is within a desired numerical range. In particular, when the second B step is performed in the second step, it is difficult to adjust the application thickness of the conductive paste. Thus, the content C1 of the carbon atoms in first region 12 can be adjusted by appropriately adjusting the parts by mass of the conductive carbon particles in the conductive paste.

<Second Step>

Next, in the second step, the conductive paste is brought into contact with the first porous body to obtain a conductive member precursor. Specifically, for example, the conductive member precursor can be obtained by performing either of the following second A step or second B step.

(Second A Step)

The conductive paste is applied to at least one surface of the first porous body. Next, the solvent is volatilized from the conductive paste. As a result, a conductive member precursor in which the conductive carbon particles are supported on at least one surface of the porous body is obtained. Further, the conductive paste may be applied to both surfaces of the first porous body. The application thicknesses of the conductive paste can be appropriately adjusted so that the content C1 of carbon atoms in first region 12 is within a desired numerical range. When the conductive paste is applied to only one surface of the first porous body, the surface of the first porous body on which the conductive carbon particles are supported corresponds to first main surface 1 of the porous body.

(Second B Step)

The entire first porous body is immersed in the conductive paste, and a pore portion of the first porous body is impregnated with the conductive paste. Next, the solvent is volatilized from the conductive paste. As a result, a conductive member precursor in which conductive carbon particles are supported on the outer surface of the skeleton of the porous body is obtained.

<Third Step>

Next, the conductive member precursor is subjected to heat treatment to obtain conductive member 3. In the heat treatment, the temperature may be, for example, 600°C to 800°C. As a result, the conductive carbon particles in the conductive paste are brought into close contact with the porous body. In the heat treatment, the atmosphere may be, for example, a nitrogen atmosphere. The time of the heat treatment may be, for example, 10 minutes to 2 hours. The atmosphere of the heat treatment and the time of the heat treatment affect the amount of conductive carbon particles attached to the porous body.

By performing the above steps, conductive member 3 according to the first embodiment can be manufactured. That is, conductive member 3 is conductive member 3 including porous body 10 having skeleton 11 with a three-dimensional mesh-like structure, wherein porous body 10 has a plate-like shape having first main surface 1 and second main surface 2 opposite to first main surface 1, first main surface 1 contains carbon atoms, and porous body 10 is a NiCrAl metal porous body or a NiCrAlFe metal porous body.

[Second Embodiment: Solid Oxide Fuel Cell Including Conductive Member]

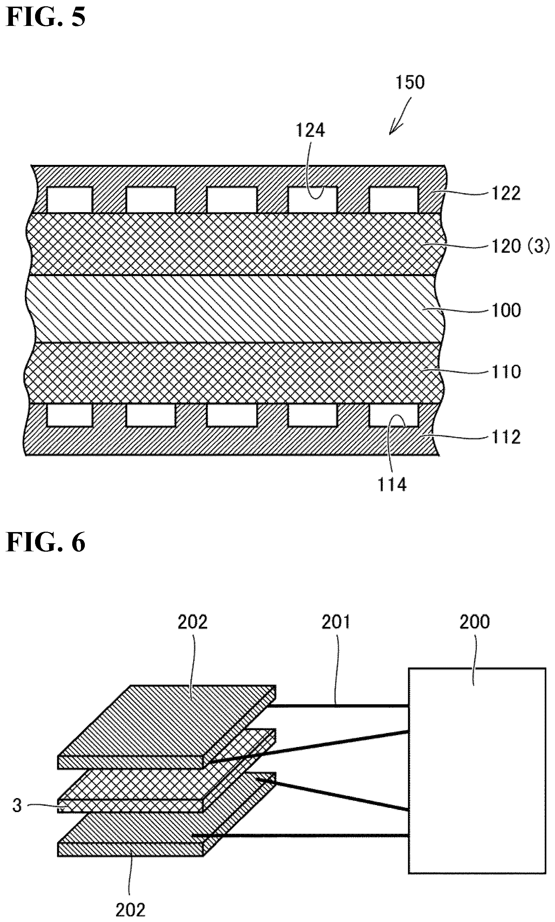

Solid oxide fuel cell 150 according to an embodiment of the present disclosure will be described with reference to FIG. 5. FIG. 5 is a schematic cross-sectional view showing solid oxide fuel cell 150 according to an aspect of the present disclosure. In FIG. 5, solid oxide fuel cell 150 includes a conductive member 110 for hydrogen electrode, a conductive member 120 for air electrode, and a cell for fuel cell 100. Cell for fuel cell 100 is provided between conductive member 110 for hydrogen electrode and conductive member 120 for air electrode. Here, the "conductive member 110 for hydrogen electrode" means a conductive member for supplying hydrogen in the fuel cell. The "conductive member 120 for air electrode" means a conductive member for supplying a gas (for example, air) containing oxygen in the fuel cell. In solid oxide fuel cell 150 of the present embodiment, conductive member 120 for air electrode is formed of conductive member 3 of the first embodiment. That is, solid oxide fuel cell 150 of the present embodiment includes conductive member 3 according to the first embodiment. This can be unlikely to increase the contact resistance between conductive member 3 and the contact member with use, and thus solid oxide fuel cell 150 having excellent output performance can be provided.

Cell for fuel cell 100 may include an air electrode, a hydrogen electrode, an electrolyte layer provided between the air electrode and the hydrogen electrode, and an intermediate layer provided between the electrolyte layer and the air electrode to prevent reaction between the electrolyte layer and the air electrode (not shown). As the air electrode, for example, an oxide of LaSrCo (LSC) is used. As the electrolyte layer, for example, an oxide of Zr doped with Y (YSZ) is used. As the intermediate layer, for example, a Ce oxide doped with Gd (GDC) is used. As the hydrogen electrode, for example, a mixture of YSZ and $NiO_2$ is used.

In FIG. 5, solid oxide fuel cell 150 further includes a first interconnector 112 having fuel flow paths 114 and a second interconnector 122 having oxidant flow paths 124. Fuel flow path 114 is a flow path for supplying fuel (for example, hydrogen) to the hydrogen electrode. Fuel flow path 114 is provided on a main surface of first interconnector 112, which is the main surface facing conductive member for hydrogen electrode 110. Oxidant flow path 124 is a flow path for supplying an oxidant (for example, oxygen) to the air electrode. Oxidant flow path 124 is provided on a main surface of second interconnector 122, which is the main surface facing conductive member for air electrode 120. First interconnector 112 and second interconnector 122 are also electrical connection members, and the surface of each of the conductive members in solid oxide fuel cell 150 are in contact with the respective connection members (interconnectors). Due to the generation of the oxide, contact resistance between the conductive member and the connection member (interconnector) may be increased, and thus, the output of the solid oxide fuel cell may be reduced. In the solid oxide fuel cell of the present disclosure, the first main surface of the conductive member and the interconnector are in contact with each other, and thus an increase in contact resistance between the conductive member and the connection member (interconnector), and further, a decrease in output of the solid oxide fuel cell, are reduced.

<<Method for Manufacturing Solid Oxide Fuel Cell Including Conductive Member>>

Solid oxide fuel cell 150 including conductive member 3 according to the present embodiment can be manufactured by appropriately using a known method except that conductive member 3 according to the first embodiment is used for conductive member for air electrode 120. Thus, the method for manufacturing solid oxide fuel cell 150 including conductive member 3 should not be particularly limited except that conductive member 3 according to the first embodiment is used.

EXAMPLES

The present disclosure will be described in detail with reference to the following examples, but the present invention is not limited to these examples.

[Example 1]

<<Manufacturing of Porous Body>>

In example 1, porous bodies of sample No. 1-1 to sample No. 1-11 were manufactured as follows.

<First Step>

To prepare a first porous body made of NiCrAl having a plate-like shape, 50 parts by mass of Ni powder (particle diameter: less than 100 $\mu$m), 14 parts by mass of Cr powder (particle diameter: less than 100 $\mu$m), 6 parts by mass of Al powder (particle diameter: less than 100 $\mu$m), 27 parts by mass of water (solvent), and 3 parts by mass of PVdF (binder) were mixed at 400 rpm for 1 hour using a small-sized ball-mill rotating frame manufactured by Asahi Rika Seisakusho, thereby preparing a slurry. Next, a polyurethane resin (foamed resin) was immersed in the obtained slurry to apply the slurry onto the foamed resin, thereby obtaining a first porous body precursor. Next, the first porous body precursor was subjected to a heat treatment in air at 650°C for about 15 minutes, and then subjected to a heat treatment in a hydrogen atmosphere at 1000°C for three hours, thereby manufacturing a first porous body made of NiCrAl (first A step).

In addition, acetylene black (conductive carbon particles) as a raw material containing carbon atoms was dispersed in 100 parts by mass of distilled water (solvent) in parts by mass described in Table 1, thereby preparing a conductive paste (first B step). In sample No. 1-1, the description that the distilled water (solvent) is "100 parts by mass" and the carbon black is "0 parts by mass" means that distilled water (solvent) not containing the carbon black was used.

<Second Step>

The conductive paste was applied to a first main surface of the first porous body by adjusting the application thickness so that the content C1 of the carbon atoms in the first region was the value shown in Table 1. Next, the conductive paste applied to the first main surface was vacuum-dried at 110°C to volatilize the distilled water (solvent) from the conductive paste. In this way, a conductive member precursor in which acetylene black (conductive carbon particles) was supported on the first main surface of the first porous body was obtained.

<Third step>

Next, the conductive member precursor was subjected to heat treatment under the conditions shown in Table 1 to obtain conductive members.

[Table 1]

| | SAMPLE No. | 1-1 | 1-2 | 1-3 | 1-4 | 1-5 | 1-6 | 1-7 | 1-8 | 1-9 | 1-10 | 1-11 |
|---|---|---|---|---|---|---|---|---|---|---|---|---|
| FIRST STEP | DISTILLED WATER [parts by mass] | 100 | 100 | 100 | 100 | 100 | 100 | 100 | 100 | 100 | 100 | 100 |
| | CARBON BLACK [parts by mass] | 0 | 5 | 6 | 7 | 10 | 15 | 20 | 25 | 30 | 35 | 40 |
| THIRD STEP | TEMPERATURE (°C) | - | 800 | 700 | 600 | 600 | 600 | 600 | 600 | 600 | 600 | 600 |
| | ATMOSPHERE | - | NITROGEN | NITROGEN | NITROGEN | NITROGEN | NITROGEN | NITROGEN | NITROGEN | NITROGEN | NITROGEN | NITROGEN |
| | TIME [min] | - | 60 | 30 | 10 | 10 | 10 | 10 | 10 | 10 | 10 | 10 |
| BEFORE USE | METAL POROUS BODY | NiCrAl | NiCrAl | NiCrAl | NiCrAl | NiCrAl | NiCrAl | NiCrAl | NiCrAl | NiCrAl | NiCrAl | NiCrAl |
| | PRESENCE OR ABSENCE OF CARBON ATOMS | ABSENCE | PRESENCE | PRESENCE | PRESENCE | PRESENCE | PRESENCE | PRESENCE | PRESENCE | PRESENCE | PRESENCE | PRESENCE |
| | C1 [atm%] | 0 | 0.1 | 0.2 | 0.5 | 1 | 2 | 5 | 10 | 20 | 50 | 90 |
| AFTER USE | CONTACT RESISTANCE | E | D | D | D | C | C | C | B | B | B | B |

In this way, conductive members of sample No. 1-1 to sample No. 1-11 were manufactured.

<<Evaluation of Characteristics of Conductive Member>>

<Presence or Absence of Carbon Atoms on First Main Surface>

The presence or absence of carbon atoms on the first main surface of each of the conductive members of sample No. 1-1 to sample No. 1-11 was determined by the method described in the first embodiment. The obtained results are shown in the column of "presence or absence of carbon atoms" in Table 1. Note that in the "presence or absence of carbon atoms", "presence" means that "the first main surface contains carbon atoms", and in the "presence or absence of carbon atoms in the first main surface", "absence" means that "the first main surface does not contain carbon atoms".

<Composition of First Region>

The content C1 of the carbon atoms in the first region of each of the conductive members of sample No. 1-1 to sample No. 1-11 was obtained by the method described in the first embodiment. The obtained results are shown in the column of "C1 [atm%]" in Table 1.

<Contact Resistance>

The contact resistance of each of the conductive members of sample No. 1-1 to sample No. 1-11 was evaluated by the following method.
Two mock interconnector plates 202 were connected to a resistance measuring machine 200 (manufactured by Tsuruga Electric Corporation, trade name: low resistance meter 356E) with a platinum wire 201 for energization. Conductive member 3 was sandwiched between two mock interconnector plates 202 (FIG. 6). Next, the temperature of each of mock interconnector plates 202 and conductive member 3 was raised to 800°C in a thermostatic bath, and then the value of the contact resistance was measured by a four terminal method. Based on the obtained values of the contact resistance, the level of the contact resistance was evaluated by the following four stage evaluation of B to E. Here, the evaluation result of the contact resistance being any one of B, C, or D indicates that the contact resistance of conductive member 3 is significantly low and the solid oxide fuel cell can have significantly excellent output performance by conductive member 3. The results are shown in the column of "contact resistance" in Table 1.

B: The contact resistance of the sample is more than 85% and equal to or less than 90% of the contact resistance of the conductive member of sample No. 1-1.
C: The contact resistance of the sample is more than 90% and equal to or less than 95% of the contact resistance of the conductive member of sample No. 1-1.
D: The contact resistance of the sample is more than 95% and equal to or less than 99% of the contact resistance of the conductive member of sample No. 1-1.
E: Baseline.

The conductive members of sample No. 1-2 to sample No. 1-11 correspond to the examples. The conductive member of sample No. 1-1 corresponds to comparative example. The conductive members of sample No. 1-2 to sample No. 1-11 have a significantly lower contact resistance than the conductive member of sample No. 1-1. That is, the solid oxide fuel cells including the conductive members of sample No. 1-2 to sample No. 1-11 can have excellent output performance compared to the solid oxide fuel cell including the conductive member of sample No. 1-1.
From the above, it was found that the solid oxide fuel cells including the conductive members of sample No. 1-2 to sample No. 1-11 had excellent output performance.

[Example 2]

<<Manufacturing of Conductive Member>>

In example 2, conductive members of sample No. 2-1 to sample No. 2-11 were manufactured as follows.

<First Step>

To prepare a first porous body made of a NiCrAlFe having a plate-like shape, 30 parts by mass of Ni powder (particle diameter: less than 100 $\mu$m), 13 parts by mass of Cr powder (particle diameter: less than 100 $\mu$m), 6 parts by mass of Al powder (particle diameter: less than 100 $\mu$m), 15 parts by mass of Fe powder (particle diameter: less than 100 $\mu$m), 33 parts by mass of water (solvent), and 3 parts by mass of PVdF (binder) were mixed at 400 rpm for 1 hour using a small-sized ball-mill rotating frame manufactured by Asahi Rika Seisakusho, thereby preparing a slurry. Next, a polyurethane resin (foamed resin) was immersed in the obtained slurry to apply the slurry onto the foamed resin, thereby obtaining a first porous body precursor. Next, the first porous body precursor was subjected to a heat treatment in air at 650°C for about 15 minutes, and then subjected to a heat treatment in a hydrogen atmosphere at 1000°C for three hours, thereby manufacturing a first porous body made of a NiCrAlFe (first A step).

In addition, acetylene black (conductive carbon particles) as a raw material containing carbon atoms was dispersed in distilled water (solvent) to prepare a conductive paste (first B step).

<Second Step>

The conductive paste was applied to a first main surface of the first porous body by adjusting the application thickness so that C1 was the value shown in Table 2. Next, the conductive paste applied to the first main surface was vacuum-dried at 110°C to volatilize the distilled water (solvent) from the conductive paste. In this way, a conductive member precursor in which acetylene black (conductive carbon particles) was supported on the first main surface of the first porous body was obtained.

<Third Step>

The conductive member precursor was subjected to heat treatment under the conditions shown in Table 2 to obtain conductive members.

[Table 2]

| | SAMPLE No. | 2-1 | 2-2 | 2-3 | 2-4 | 2-5 | 2-6 | 2-7 | 2-8 | 2-9 | 2-10 | 2-11 |
|---|---|---|---|---|---|---|---|---|---|---|---|---|
| FIRST STEP | DISTILLED WATER [parts by mass] | 100 | 100 | 100 | 100 | 100 | 100 | 100 | 100 | 100 | 100 | 100 |
| | CARBON BLACK [parts by mass] | 0 | 5 | 6 | 7 | 10 | 15 | 20 | 25 | 30 | 35 | 40 |
| THIRD STEP | TEMPERATURE (°C) | - | 800 | 700 | 600 | 600 | 600 | 600 | 600 | 600 | 600 | 600 |
| | ATMOSPHERE | - | NITROGEN | NITROGEN | NITROGEN | NITROGEN | NITROGEN | NITROGEN | NITROGEN | NITROGEN | NITROGEN | NITROGEN |
| | TIME [min] | - | 60 | 30 | 10 | 30 | 10 | 10 | 10 | 10 | 10 | 10 |
| | METAL POROUS BODY | NiCrAlFe | NiCrAlFe | NiCrAlFe | NiCrAlFe | NiCrAlFe | NiCrAlFe | NiCrAlFe | NiCrAlFe | NiCrAlFe | NiCrAlFe | NiCrAlFe |
| BEFORE USE | PRESENCE OR ABSENCE OF CARBON ATOMS | ABSENCE | PRESENCE | PRESENCE | PRESENCE | PRESENCE | PRESENCE | PRESENCE | PRESENCE | PRESENCE | PRESENCE | PRESENCE |
| | C1 [atm%] | 0 | 0.1 | 0.2 | 0.5 | 1 | 2 | 5 | 10 | 20 | 50 | 90 |
| AFTER USE | CONTACT RESISTANCE | E' | D' | D' | D' | C' | C' | C' | B' | B' | B' | B' |

16

In this way, conductive members of sample No. 2-1 to sample No. 2-11 were manufactured.

<<Evaluation of Characteristics of Conductive Member>>

<Presence or Absence of Carbon Atoms on First Main Surface>

The presence or absence of carbon atoms on the first main surface of each of the conductive members of sample No. 2-1 to sample No. 2-11 was evaluated by the same method as in the example 1. The obtained results are shown in the column of "presence or absence of carbon atoms" in Table 2.

<Composition of First Region>

The composition of the first region of each of the conductive members of sample No. 2-1 to sample No. 2-11 was obtained by the same method as in example 1. The obtained results are shown in the column of "C1 [atm%]" in Table 2.

<Contact Resistance>

The contact resistance of each of the conductive members of sample No. 2-1 to sample No. 2-11 was evaluated by the same method as in example 1 except that the level of the contact resistance was evaluated by the following four stage evaluation of B' to E'. The obtained results are shown in the column of "contact resistance" in Table 2. The evaluation result of the contact resistance being any one of B', C', or D' indicates that the contact resistance of the conductive member is significantly low and that the solid oxide fuel cell can have significantly excellent output performance by the conductive member.

B': The contact resistance of the sample is more than 85% and equal to or less than 90% of the contact resistance of the conductive member of sample No. 2-1.
C': The contact resistance of the sample is more than 90% and equal to or less than 95% of the contact resistance of the conductive member of sample No. 2-1.
D': The contact resistance of the sample is more than 95% and equal to or less than 99% of the contact resistance of the conductive member of sample No. 2-1.
E': Baseline.

The conductive members of sample No. 2-2 to sample No. 2-11 correspond to the examples. The conductive member of sample No. 2-1 corresponds to comparative example. The conductive members of sample No. 2-2 to sample No. 2-11 have a significantly lower contact resistance than the conductive member of sample No. 2-1. That is, the solid oxide fuel cells including the conductive members of sample No. 2-2 to sample No. 2-11 can have excellent output performance compared to the solid oxide fuel cell including the conductive member of sample No. 2-1.
From the above, it was found that the solid oxide fuel cells including the conductive members of sample No. 2-2 to sample No. 2-11 had excellent output performance.
Although the embodiments and examples of the present disclosure have been described above, it is originally intended to appropriately combine the constitutions of the above-described embodiments and examples.
The embodiments disclosed herein are to be considered in all respects as illustrative and not restrictive. The scope of the present invention is defined by the appended claims rather than the foregoing embodiments, and is intended to include all modifications within the scope and meaning equivalent to the appended claims.

REFERENCE SIGNS LIST

1 first main surface
2 second main surface
3 conductive member
10 porous body
11 skeleton
12 first region
13 interior
14 pore portion
15 skeleton body

21 outer surface
22 inner surface
100 cell for fuel cell
110 conductive member for hydrogen electrode
112 first interconnector
114 fuel flow path
120 conductive member for air electrode
122 second interconnector
124 oxidant flow path
150 solid oxide fuel cell
200 resistance meter
201 platinum wire
202 mock interconnector plate

## Claims

1. A conductive member comprising a porous body having a skeleton with a three-dimensional mesh-like structure,

   wherein the porous body has a plate-like shape having a first main surface and a second main surface opposite to the first main surface,
   the first main surface contains carbon atoms, and
   the porous body is a NiCrAl metal porous body or a NiCrAlFe metal porous body.

2. The conductive member according to claim 1, wherein the carbon atoms are present in a form of conductive carbon.

3. The conductive member according to claim 1 or 2, wherein the skeleton has a first region,

   the first region is a region extending from the first main surface to a plane parallel to the first main surface, the plane being distant from the first main surface by 10 nm, and
   a content of the carbon atoms in the first region is 10 atm% to 90 atm%.

4. The conductive member according to claim 3, wherein the content is 20 atm% to 80 atm%.

5. The conductive member according to claim 3, wherein the content is 30 atm% to 70 atm%.

6. The conductive member according to any one of claims 1 to 5, wherein a thickness of the porous body is 0.2 mm to 2 mm.

7. The conductive member according to any one of claims 1 to 6, wherein an average pore size of the porous body is 60 $\mu$m to 3500 $\mu$m.

8. The conductive member according to claim 7, wherein the average pore size of the porous body is 100 $\mu$m to 850 $\mu$m.

9. The conductive member according to any one of claims 1 to 8, wherein a porosity of the porous body is 50% to 98%.

10. The conductive member according to any one of claims 1 to 9, wherein in the NiCrAl metal porous body, a skeleton body contains a Ni element, a Cr element, and an Al element in a total amount of 55 mass% or more.

11. The conductive member according to any one of claims 1 to 9, wherein in the NiCrAlFe metal porous body, a skeleton body contains a Ni element, a Cr element, an Al element, and an Fe element in a total amount of 55 mass% or more.

12. A solid oxide fuel cell comprising the conductive member according to any one of claims 1 to 11.

13. The solid oxide fuel cell according to claim 11, wherein the first main surface is in contact with at least one of a first interconnector and a second interconnector.

**FIG. 1**

3(10)

**FIG. 2**

3(10)

**FIG. 3**

**FIG. 4**

**FIG. 5**

**FIG. 6**

**EP 4 597 647 A1**

## INTERNATIONAL SEARCH REPORT

International application No.

**PCT/JP2023/022176**

### A. CLASSIFICATION OF SUBJECT MATTER

*H01M 8/0245*(2016.01)i; *H01M 8/0232*(2016.01)i; *H01M 8/0234*(2016.01)i; *H01M 8/0247*(2016.01)i; *H01M 8/12*(2016.01)i
FI:   H01M8/0245; H01M8/0232; H01M8/0234; H01M8/0247; H01M8/12 101; H01M8/12 102A

According to International Patent Classification (IPC) or to both national classification and IPC

### B. FIELDS SEARCHED

Minimum documentation searched (classification system followed by classification symbols)

H01M8/0245; H01M8/0232; H01M8/0234; H01M8/0247; H01M8/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 06-029024 A (AGENCY OF IND SCIENCE & TECHNOL) 04 February 1994 (1994-02-04) <br> paragraphs [0016]-[0026], fig. 2-3, 5, 9-10 | 1-13 |
| Y | JP 2017-027654 A (SUMITOMO ELECTRIC INDUSTRIES) 02 February 2017 (2017-02-02) <br> paragraphs [0021]-[0094] | 1-13 |
| Y | JP 2017-054797 A (SUMITOMO ELECTRIC INDUSTRIES) 16 March 2017 (2017-03-16) <br> paragraphs [0026]-[0097], fig. 1 | 1-13 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2023** | **05 September 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

22

| INTERNATIONAL SEARCH REPORT Information on patent family members | | International application No. PCT/JP2023/022176 | |
|---|---|---|---|
| Patent document cited in search report | Publication date (day/month/year) | Patent family member(s) | Publication date (day/month/year) |
| JP 06-029024 A | 04 February 1994 | (Family: none) | |
| JP 2017-027654 A | 02 February 2017 | WO 2015/087948 A1 paragraphs [0021]-[0094] | |
| JP 2017-054797 A | 16 March 2017 | US 2018/0261853 A1 paragraphs [0046]-[0200], fig. 1 WO 2017/043365 A1 EP 3349282 A1 KR 10-2018-0050645 A CN 108140845 A | |

Form PCT/ISA/210 (patent family annex) (January 2015)

**EP 4 597 647 A1**

**Patent documents cited in the description**

- JP 2022155329 A
- WO 2016021988 A
- JP 6029024 A
- WO 2019244480 A